# EUROPÄISCHE PATENTANMELDUNG

(11) **EP 3 838 077 A1**
(43) Veröffentlichungstag der Anmeldung: **23.06.2021**
(21) Anmeldenummer: 20207679.0
(22) Anmeldetag: 16.11.2020
(51) Int. Cl.: A47J 31/057, A47J 31/06

(54) **VORRICHTUNG ZUR ZUBEREITUNG EINES BRÜHGETRÄNKES**

(30) Priorität: 20.12.2019 DE 102019135401
(71) Anmelder: 10 X Innovation GmbH & Co. KG, 10961 Berlin (DE)
(72) Erfinder: KORTE, René, 30161 Hannover (DE)
(74) Vertreter: Dantz, Jan Henning

(57) **Zusammenfassung**

Eine Vorrichtung (1) zur Zubereitung eines Brühgetränkes umfasst eine Basisstation (2), in der eine Pumpe (51), eine Heizeinrichtung (50) und eine Steuerung vorgesehen sind, und einen auf der Basisstation (2) lösbar angeordneten Tank (10) für Frischwasser, wobei eine von der Basisstation (2) nach oben hervorstehende Zuleitung (6) mit einem Auslass (7) für erhitztes Wasser vorgesehen ist, der oberhalb eines mit Extraktionsmaterial befüllbaren Filterhalters (30) angeordnet ist, wobei der Filterhalter (30) einen Auslass (32) aufweist, der über ein ansteuerbares Ventil (33) verschließbar ist.

## Beschreibung

Die vorliegende Erfindung betrifft eine Vorrichtung zur Zubereitung eines Brühgetränkes, mit einer Basisstation, in der eine Pumpe, eine Heizeinrichtung und eine Steuerung vorgesehen sind, und einem auf der Basisstation lösbar angeordneten Tank für Frischwasser, wobei eine von der Basisstation nach oben hervorstehende Zuleitung mit einem Auslass für erhitztes Wasser vorgesehen ist, der oberhalb eines mit Extraktionsmaterial befüllbaren Filterhalters angeordnet ist.

Die DE 10 2015 121 634 B4 offenbart eine Kaffeemaschine, bei der heißes Wasser über eine Pumpe zu einer Auslasseinrichtung oberhalb eines Filtergefäßes mit einem Filterpapiereinsatz mit Kaffeemehl gefördert wird. Die Auslasseinrichtung weist eine zentrale Auslassöffnung und mehrere äußere Auslass-öffnungen auf, um das Kaffeemehl abhängig von der eingestellten Kaffeestärke zu durchströmen. Das Filtergefäß besitzt an der Unterseite einen Auslass, um den gebrühten Kaffee in eine Kanne abzuleiten. Bei Entnahme der Kanne wird der Auslass über ein Ventil verschlossen, das durch eine Feder in die geschlossene Position vorgespannt ist. Ein Verschließen des Ventils ist somit nur möglich, wenn die Kanne der Kaffeemaschine exakt positioniert ist, und es ist erforderlich, dass eine entsprechende Aufnahme zum Positionieren der Kanne vorgesehen ist.

Es ist daher Aufgabe der vorliegenden Erfindung, eine Vorrichtung zur Zubereitung eines Brühgetränkes zu schaffen, die in der Handhabung für den Benutzer komfortabler ist.

Diese Aufgabe wird mit einer Vorrichtung mit den Merkmalen des Anspruches 1 gelöst.

Bei der erfindungsgemäßen Vorrichtung ist ein Filterhalter zur Aufnahme von Kaffeemehl vorgesehen, der einen Auslass aufweist, der über ein ansteuerbares Ventil verschließbar ist. Dadurch kann das Ventil unabhängig von der Position eines darunter abgestellten Gefäßes geöffnet und geschlossen werden. Ein Nachtropfen aus dem Filterhalter nach der Beendigung des Brühvorganges wird somit vermieden. Zudem kann das Gefäß auf einer ebenen Fläche der Basisstation abgestellt werden, was auch die Reinigung der Abstellfläche erleichtert.

Vorzugsweise ist ein Montagehalter für den Filterhalter mit mindestens einem Anschluss zu einer Steuerleitung vorgesehen, über die bei eingesetztem Filterhalter das Ventil ansteuerbar ist. Das Ventil kann somit eine Öffnung an dem Auslass öffnen oder verschließen, wobei die Ansteuerung über eine Steuerleitung erfolgt, die bei Einsetzen des Filterhalters in den Montagehalter kontaktiert wird, insbesondere über elektrische Kontaktelemente, so dass das Ventil über eine Steuerung in der Basisstation betätigbar ist. Diese Art der Steuerung verbessert das Geschmackserlebnis, weil aus dem Filterhalter nachlaufende wäßrige Restflüssigkeit nicht mehr in das Gefäß gelangt, in dem der frisch gebrühte Kaffee gesammelt wurde. Zudem kann über ein Programm die Verweilzeit des eingefüllten heißen Wassers besser gesteuert werden.

In einer bevorzugten Ausgestaltung weist das Ventil an dem Auslass einen Hebel mit einem Ventilkörper auf, der drehbar an dem Auslass gelagert ist und über eine Feder in eine Verschlussposition vorgespannt ist. Der Hebel kann dabei über einen bestrombaren Elektromagneten von einer Schließposition in eine Öffnungsposition bewegt werden, so dass keine mechanische Kontaktierung des Hebels notwendig ist, die leicht verunreinigen kann. Über den Elektromagneten oder andere berührungslos arbeitende Betätigungsmittel kann somit das Ventil geöffnet und geschlossen werden. Der Hebel kann dabei als zweiarmiger Hebel ausgebildet sein, so dass die Drehachse zwischen dem Elektromagnet und dem Ventil angeordnet ist.

Für einen effektiven Brühvorgang ist an der Basisstation vorzugsweise hinter der Heizeinrichtung ein Schaltventil angeordnet, um das erhitzte Wasser wahlweise in den Tank für Frischwasser zurückzuleiten oder das erhitzte Wasser dem Auslass zuzuführen. Dadurch kann über die Pumpe und die Heizeinrichtung zunächst ein Vorwärmen des Wassers indem Tank für Frischwasser vorgenommen werden, beispielsweise bis zu einer vorbestimmten Temperatur zwischen 40 °C bis 70 °C, um dann erst in einem zweiten Schritt das vorgewärmte Wasser über die Pumpe durch die Heizeinrichtung dem Auslass zuzuleiten. Ein solches Vorheizen des Wassers kann die Zubereitungszeit verkürzen, insbesondere wenn das Vorheizen parallel zu einem vorgelagerten Schritt des Mahlens von Kaffeebohnen stattfindet.

Bei der erfindungsgemäßen Vorrichtung ist vorzugsweise eine Mahleinheit vorgesehen, die auf der Basisstation angeordnet ist und einen Bohnenbehälter und ein Mahlwerk für Kaffeebohnen aufweist, das über einen Elektromotor angetrieben ist. Die elektrische Stromversorgung kann dabei über einen Anschluss zwischen der Basisstation und der Mahleinheit erfolgen. Die Mahleinheit kann dabei drehbar auf der Basisstation angeordnet sein, so dass die Position eines Auslasses der Mahleinheit für gemahlenes Kaffeemehl gewählt werden kann. An der Mahleinheit kann ferner ein Halter zum Anhängen des Filterhalters vorgesehen sein, um das gemahlene Kaffeemehl in dem Filterhalter aufzufangen, wobei optional der Halter mit einer Wägezelle verbunden ist, um eine Erfassung des Gewichts des eingefüllten gemahlenen Kaffeemehls zu erfassen und darüber die Mahleinheit abzuschalten, wenn der Filterhalter ausreichend gefüllt ist. Dadurch wird über die Steuerung erfasst, wie viel Kaffeemehl im Filterhalter angeordnet ist und welche Wassermenge abhängig von der gewünschten Stärke benötigt wird, so dass der Brühvorgang automatisch ablaufen kann.

In einer weiteren Ausgestaltung weist die Zuleitung eine erste Leitung für heißes Wasser zu einem ersten Auslass und eine zweite Leitung für heißes Wasser zu einem zweiten Auslass auf. Dadurch kann über ein schaltbares Ventil hinter der Pumpe ausgewählt werden, welche der beiden Zuleitungen mit heißem Wasser versorgt wird, um beispielsweise unterschiedliche Bereiche des Kaffeemehls mit heißem Wasser zu benetzen

Die Erfindung wird nachfolgend anhand eines Ausführungsbeispiels mit Bezug auf die beigefügten Zeichnungen näher erläutert. Es zeigen:

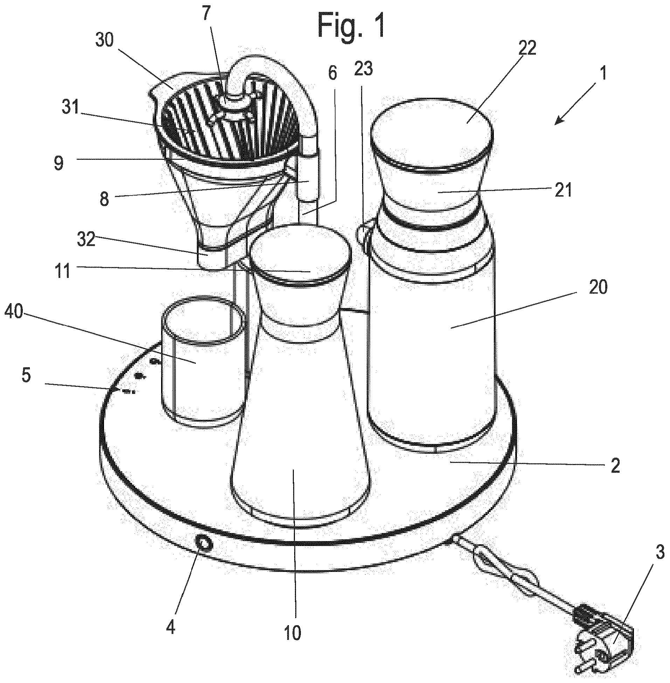

- Figur 1: eine perspektivische Ansicht der erfindungsgemäßen Vorrichtung;
- Figur 2: eine Seitenansicht der Vorrichtung der Figur 1;
- Figur 3: eine perspektivische Ansicht der Basisstation;
- Figur 4: eine Ansicht der Mahleinheit;
- Figur 5: ein schematisches Schaubild der Vorrichtung der Figur 1;
- Figur 6: eine geschnittene Detailansicht des Filterhalters mit dem Auslass.

Eine Vorrichtung 1 zur Zubereitung eines Brühgetränkes, insbesondere Kaffee, umfasst eine Basisstation 2, mit einem im Wesentlichen plattenförmigen Körper, der ein Gehäuse ausbildet. Die Basisstation 2 ist über einen Netzstecker 3 mit einer Stromversorgung verbunden. In dem Gehäuse der Basisstation 2 befinden sich eine Steuerung, mindestens eine Pumpe und eine Heizeinrichtung zum Erwärmen von Wasser. Die Basisstation 2 kann dabei über einen an einem Rand angeordneten Schalter 4 ein- und ausgeschaltet werden und weist an einer Oberseite ein Bedienfeld 5 auf, um bestimmte Parameter beim Brühvorgang automatisch zu steuern.

Auf der Basisstation 2 ist ein Tank 10 abnehmbar angeordnet, der über einen Deckel 11 verschlossen ist. Neben dem Tank 10 ist eine optional vorgesehene Mahleinheit 20 auf der Basisstation 2 abgestellt, die ebenfalls von der Basisstation 2 abnehmbar ist, optional aber auch fest mit dieser verbunden sein kann. Die Mahleinheit 20 ist dabei um eine vertikale Achse drehbar auf der Basisstation 2 angeordnet, so dass die Richtung eines Auslasses 23 für gemahlenes Kaffeemehl vom Benutzer beliebig vorgenommen werden kann. Die Mahleinheit 20 ist dabei vorzugsweise über Rastmittel, insbesondere mindestens einen Magneten, an der Basisstation 2 gehalten. Die Mahleinheit 20 umfasst einen Motor zum Antrieb des Mahlwerkes, sowie einen Behälter 21 für Kaffeebohnen, der über einen Deckel 22 verschlossen ist.

Auf der Basisstation 2 ist ferner eine von dem Körper der Basisstation 2 nach oben hervorstehende Zuleitung 6 für heißes Wasser vorgesehen, die sich zunächst vertikal nach oben erstreckt und dann U-förmig gebogen ist und an einem Auslass 7 mündet, der optional von der Zuleitung 6 abnehmbar ist und beispielsweise über Magnetkräfte oder andere Haltemittel an der Zuleitung gehalten ist. Von dem Auslass 7 kann erhitztes Wasser in einen Filterhalter 30 eingeleitet werden, der einen Innenraum 31 aufweist, insbesondere einen trichterförmigen oder konusförmigen Innenraum, der an der Unterseite einen Auslass 32 aufweist, um gebrühten Kaffee in ein Gefäß 40, wie eine Tasse oder eine Kanne, abzuleiten. Der Filterhalter 30 ist dabei an einem Montagehalter 9 in einem vorbestimmten Abstand von der Oberfläche der Basisstation 2 angeordnet, beispielsweise zwischen 8 und 20 cm, insbesondere 10 bis 15 cm, um ein Gefäß 40 unter dem Filterhalter 30 abstellen zu können. Der Montagehalter 9 umfasst zwei Arme, die den Filterhalter 30 klemmend oder rastend umgreifen oder diesen lose abstützen. Auch andere Haltemittel können zur Fixierung des Filterhalters 30 eingesetzt werden. Der Montagehalter 9 ist über eine Hülse 8 an der Zuleitung 6 fixiert.

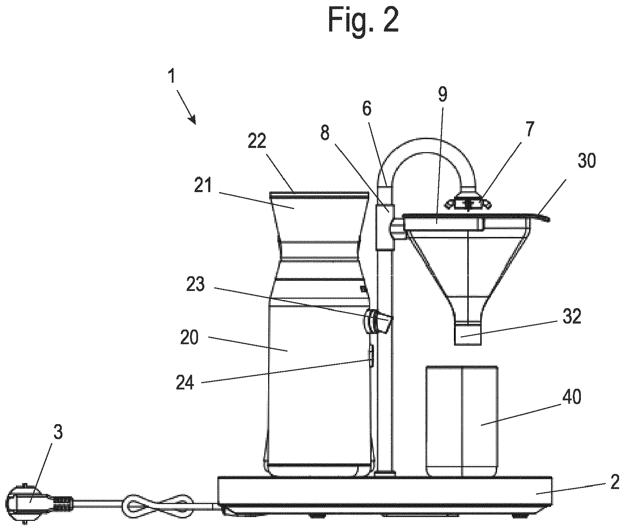

In Figur 2 ist erkennbar, dass die Mahleinheit 20 einen Halter 24 aufweist, der unterhalb des Auslasses 23 für gemahlenes Kaffeemehl angeordnet ist, wobei die Position des Halters 24 auch neben oder über dem Auslass 23 angeordnet sein kann. An dem Halter 24 kann der Filterhalter 30 mit einem Verbindungselement eingehängt werden, so dass das Gewicht des Filterhalters 30 an dem Halter 24 gehalten wird. Der Halter 24 ist vorzugsweise mit einer Wägezelle gekoppelt, die nach dem Einhängen des Filterhalters 30 erfasst, welche Menge an Kaffeemehl in den Filterhalter 30 eingefügt wird. Dadurch kann, abhängig von der eingestellten Kaffeestärke und der zu brühenden Wassermenge, bestimmt werden, welche Menge an Kaffeemehl in den Filterhalter 30 über die Mahleinheit 20 eingefüllt wird.

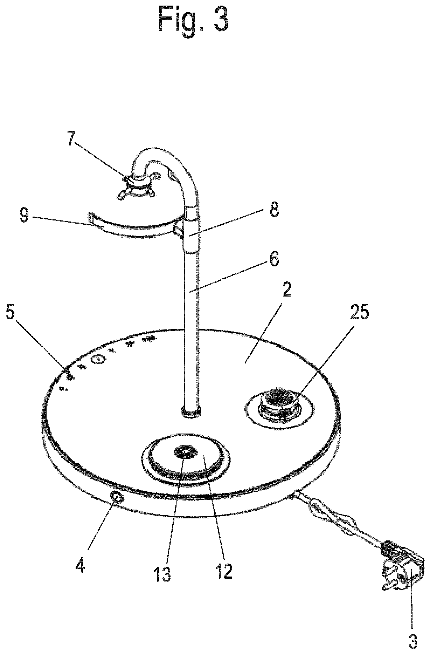

In Figur 3 ist die Basisstation 2 ohne die optionale Mahleinheit 20 und den Tank 10 gezeigt. An der Oberseite der im Wesentlichen plattenförmigen Basisstation 2 befindet sich ein domförmiger Verbindungsstecker 25, beispielsweise ein zapfenförmiger Vorsprung, der einen Verbindungsstecker ausbildet und mit einem Stecker oder einer Buchse an der Unterseite der Mahleinheit 20 verbindbar ist, um die Mahleinheit 20 elektrisch mit der Basisstation 2 zu verbinden. Zudem können auch eine oder mehrere Steuerleitungen bei einer Kontaktierung verbunden werden. Durch den im Querschnitt kreisförmigen Verbindungsstecker 25 kann die Mahleinheit 20 um eine vertikale Achse gedreht werden und bleibt mit der Basisstation 2 elektrisch verbunden.

An der Oberseite der Basisstation 2 ist ferner ein Anschluss 12 zur Verbindung mit dem Tank 10 für Frischwasser vorgesehen, der mindestens eine Öffnung 13 aufweist, durch die das Wasser aus dem Tank 10 in die Basisstation 2 eingeleitet und dort erhitzt werden kann, um das erhitzte Wasser dann über die Zuleitung 6 und den Auslass 7 in den Filterhalter 30 zu fördern.

Das Bedienfeld 5 an der Basisstation 2 kann beispielsweise zur Einstellung der Stärke des Kaffees dienen und auch der Menge an zu brühendem Kaffee. Indirekt kann dadurch auch der Mahlgrad eingestellt werden.

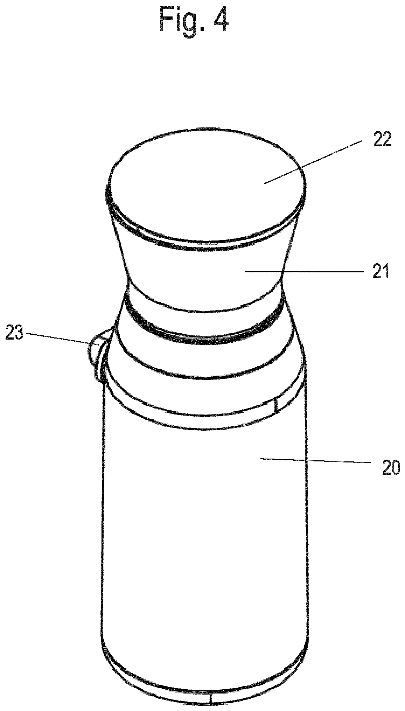

In Figur 4 ist die Mahleinheit 20 gezeigt. Die Mahleinheit 20 umfasst einen unteren, im Wesentlichen zylinderförmigen Abschnitt, in dem ein Motor für das Mahlwerk sowie eine Steuerung vorgesehen sein können. Darüber ist der Behälter 21 für Kaffeebohnen angeordnet, über den Kaffeebohnen in das Mahlwerk gefördert werden können, um dann das gemahlene Kaffeemehl an dem Auslass 23 auszugeben.

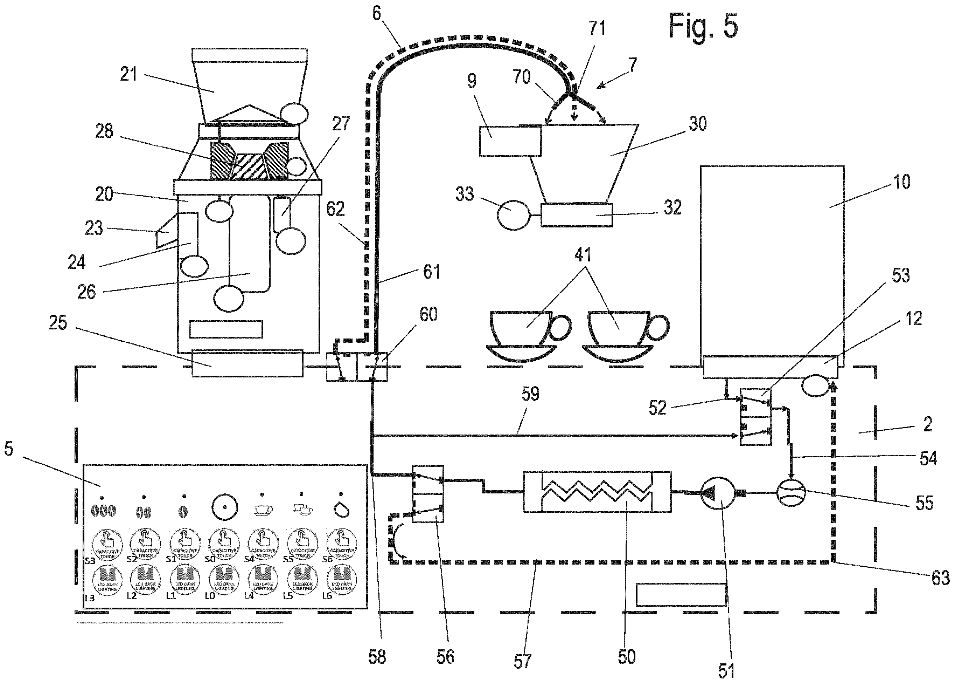

In Figur 5 ist ein Ablaufdiagramm der Vorrichtung 1 schematisch dargestellt. Der Tank 10 mit Frischwasser ist über den Anschluss 12 mit der Basisstation 2 verbunden, die durch den gestrichelten Rahmen dargestellt ist. Dabei ist ein Anschluss 12 über eine Leitung 52 und ein schaltbares Ventil 53, eine Leitung 54, ein Drosselelement 55 mit einer Pumpe 51 verbunden, so dass Wasser aus dem Tank 10 zu der Pumpe 51 angesaugt werden kann. Über die Pumpe 51 wird das Wasser durch eine schematisch dargestellte Heizeinrichtung 50 mit Heizwiderständen gefördert, um das vorgewärmte oder erhitzte Wasser zu einem Ventil 56 zu fördern. Das Ventil 56 ist zwischen zwei Positionen schaltbar. In einer ersten Position wird Wasser von der Heizeinrichtung 50 über eine Rückführleitung 63, die gestrichelt dargestellt ist, wieder über den Anschluss 12 in den Tank 10 für Frischwasser eingeleitet. Dadurch kann das Wasser in dem Tank 10 vorgewärmt werden, was beispielsweise zeitgleich oder zumindest teilweise zeitgleich zu dem Mahlvorgang stattfinden kann. Das Vorwärmen des Wassers in dem Tank 10 erfolgt vorzugsweise bis zu einer bestimmten Temperatur, beispielsweise zwischen 40° und 60°. Erst wenn eine bestimmte Vorlauftemperatur erreicht wird, kann das Ventil 56 in die zweite Position geschaltet werden, um das durch die Heizeinrichtung 51 durchgeleitete erhitzte Wasser über eine Leitung 58 der Zuleitung 6 zuzuführen.

In der Leitung 58 befindet sich ein weiteres Ventil 60, das das heiße Wasser wahlweise einer ersten Leitung 61 zu einem ersten Auslass 70 oder zu einer zweiten Leitung 62 zu einem zweiten Auslass 71 fördert. Der erste Auslass 70 kann beispielsweise einen Randbereich des Kaffeemehls in dem Filterhalter 30 benetzen, während der zweite Auslass 71 eher einen mittleren Bereich des Kaffeemehls in dem Filterhalter 30 benetzt. Die Auslässe 70 und 71 können zeitgleich oder abwechselnd angesteuert werden, um einen möglichst gleichmäßigen Extraktionsvorgang zu gewährleisten.

Die Leitung 58 ist ferner über eine Entleerungsleitung 59 mit dem Ventil 53 verbunden, so dass nach dem Brühvorgang noch vorhandenes Restwasser aus der Zuleitung 6 angesaugt und wieder in den Tank 10 für Frischwasser eingeleitet werden kann.

Auf der Basisstation 2 ist ferner die Mahleinheit 20 abgestellt, die über einen Verbindungsstecker 25 zur elektrischen Kontaktierung zur Stromversorgung und/oder Steuerung mit der Mahleinheit 20 verbunden ist. In der Mahleinheit 20 befindet sich ein Elektromotor 26, mit dem das Mahlwerk 28 angetrieben wird. Über das Mahlwerk 28 kann vorzugsweise der Mahlgrad eingestellt werden, um die Kaffeebohnen in dem Behälter 21 in der gewünschten Feinheit zu zermahlen. Hierfür kann eine entsprechende Einstellvorrichtung 27 vorgesehen sein, die über eine Steuerleitung ansteuerbar ist.

An der Mahleinheit 20 befindet sich ferner der Auslass 23 für gemahlenes Kaffeemehl und der Halter 24 zum Einhängen des Filterhalters 30. Der Halter 24 ist mit der Wägeeinheit verbunden, die optional ebenfalls mit der Steuerung in der Basisstation 2 gekoppelt sein kann.

In Figur 5 ist ferner noch das Bedienfeld 5 gezeigt, mittels dem gewisse Einstellungen zum Brühen von Kaffee vorgenommen werden können, insbesondere die Kaffeestärke und die Menge an gebrühtem Kaffee.

An dem Auslass 32 an der Unterseite des Filterhalters 30 können vorzugsweise zwei beabstandete Öffnungen vorgesehen sein, um optional auch gleichzeitig zwei Tassen 41 befüllen zu können. An dem Auslass 32 ist ein Ventil 33 vorgesehen, um eine Auslassöffnung an dem Filterhalter 30 wahlweise zu verschließen oder zu öffnen, um die Verweilzeit des heißen Wasser an dem Kaffeemehl beim Brühen einstellen zu können. Zudem wirkt das Ventil 33 als Tropfschutz. Das Ventil 33 kann über eine nicht dargestellte Stromversorgung über den Montagehalter 9 und die Zuleitung 6 mit der Basisstation 2 verbunden sein.

Zur Zubereitung von Kaffee wird zunächst der Tank 10 mit ausreichend Frischwasser gefüllt und anschließend eine Kaffeestärke an dem Bedienfeld 5 sowie die Wassermenge eingestellt. Der Filterhalter 30 wird vorzugsweise mit einem Filterpapiereinsatz gefüllt, der optional auch weggelassen werden kann, wenn der Filterhalter 30 ein entsprechendes Sieb aufweist. Der mit dem Filterpapiereinsatz gefüllte Filterhalter 30 wird dann an dem Halter 24 eingehängt, wobei der Halter 24 das Einhängen des Filterhalters 30 über einen Sensor erfassen kann, um dann automatisch mit dem Mahlvorgang zu starten. Alternativ kann der Mahlvorgang auch über eine Taste an dem Bedienfeld 5 eingeleitet werden. Sobald die gewünschte Menge an Kaffeemehl in den Filterhalter 30 eingefüllt wurde, stoppt die Mahleinheit 20 den Mahlvorgang. Während des Mahlvorganges kann das Wasser in dem Tank 10 über die Pumpe 51 und die Heizeinrichtung 50 vorgewärmt werden, beispielsweise zwischen 20° bis 50° über Raumtemperatur.

Der Filterhalter 30 wird nun von der Mahleinheit 20 entfernt und an dem Montagehalter 9 fixiert. Dann kann über das Drücken einer Taste oder automatisch das Einfüllen von heißem Wasser über die Zuleitung 6 erfolgen, wahlweise über einen einzigen Auslass 70 oder 71oder wechselnd über mehrere Auslässe 70 und 71. Über den inneren Auslass 71 wird dabei eher der mittlere Bereich des Kaffeemehls benetzt und durch die die Leitungen des Auslasses 70 eher die Randbereiche des Kaffeemehls. Der gebrühte Kaffee wird dann bei Öffnen des Ventils 33 an dem Auslass 32 in die Tassen 41 oder andere Gefäße abgelassen.

In einer weiteren nicht dargestellten Ausführungsform kann an der Zuleitung 6 oberhalb des Filterhalters 30 ein Sensor angeordnet sein, mittels dem erfassbar ist, ob ein Filterhalter 30, insbesondere ein gefüllter Filterhalter, unter dem Auslauf 7 angeordnet ist. Dann kann eine Ausgabe von heißem Wasser an dem Auslass 7 über die Steuerung der Basisstation 2 verhindert werden, falls versehentlich kein Filterhalter 30 oder ein nicht mit Kaffeemehl gefüllter Filterhalter 30 unter dem Auslass 7 angeordnet ist. Ein solcher Sensor kann beispielsweise über optische Mittel eine Erkennung durchführen, beispielsweise indem Lichtstrahlen ausgegeben werden und die reflektierten Lichtstrahlen über einen optischen Sensor erfasst werden. Zumindest die Farbgebung unterhalb des Sensors lässt sich auf diese Weise erfassen. Auch andere Sensoren, beispielsweise Kontaktsensoren, können eingesetzt werden, um zu erfassen, ob der Filterhalter 30 eingesetzt ist. Mit einem optischen Sensor lässt sich allerdings zusätzlich feststellen, ob der Filterhalter 30 befüllt ist.

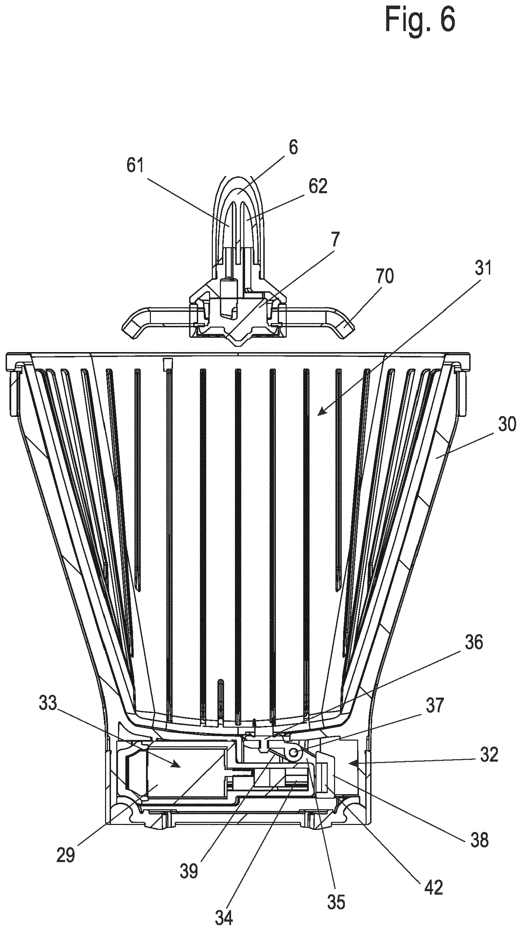

In Figur 6 ist der Filterhalter 30 mit dem Auslass 32 im Schnitt gezeigt. Unter dem Innenraum 31 zur Aufnahme des Kaffeemehls ist ein Ventilkörper 36 an einem Hebel 35 angeordnet, um eine Auslassöffnung zu öffnen oder zu schließen. Der Hebel 35 ist um eine Achse 37 an dem Auslass 32 drehbar gelagert und über eine Feder 39 in eine geschlossene Position vorgespannt.

An dem Hebel 35 ist ferner ein Magnethalter 38 mit mindestens einem Magnet 42 angeordnet, der mit einem bestrombaren Elektromagneten 34 an einem Schalter 29 betätigt werden kann. Durch Bestromen des Elektromagneten 34 wird der Magnet 42 mit einer Magnetkraft beaufschlagt, um den Hebel 35 um die Achse 37 zu drehen und somit den Ventilkörper 36 von der Auslassöffnung abzuheben. Nach dem Ende des Bestromen des Elektromagneten 34 wird der Hebel 35 über die Feder 39 wieder in die Verschlussposition bewegt. Dadurch lässt sich der Hebel 35 kontaktlos betätigen. Der Hebel 35 ist als zweiarmiger Hebel ausgebildet, bei dem die Achse 37 zwischen dem Ventilkörper 36 und dem Magneten 38 angeordnet ist, wobei auch andere Gestaltungen zum Verschließen einer Auslassöffnung eingesetzt werden können.

In dem dargestellten Ausführungsbeispiel umfasst die Vorrichtung 1 eine Basisstation 1, an der eine Mahleinheit 20 vorgesehen ist. Diese kann in einer modifizierten Ausführung auch weggelassen werden oder als separate Mahleinheit neben der Vorrichtung 1 aufgestellt werden.

### Bezugszeichenliste

- 1: Vorrichtung
- 2: Basisstation
- 3: Netzstecker
- 4: Schalter
- 5: Bedienfeld
- 6: Zuleitung
- 7: Auslass
- 8: Hülse
- 9: Montagehalter
- 10: Tank
- 11: Deckel
- 12: Anschluss
- 13: Öffnung
- 20: Mahleinheit
- 21: Behälter
- 22: Deckel
- 23: Auslass
- 24: Halter
- 25: Verbindungsstecker
- 26: Elektromotor
- 27: Einstellvorrichtung
- 28: Mahlwerk
- 29: Schalter
- 30: Filterhalter
- 31: Innenraum
- 32: Auslass
- 33: Ventil
- 34: Elektromagnet
- 35: Hebel
- 36: Ventilkörper
- 37: Achse
- 38: Magnethalter
- 39: Feder
- 40: Gefäß
- 41: Tasse
- 42: Magnet
- 50: Heizeinrichtung
- 51: Pumpe
- 52: Leitung
- 53: Ventil
- 54: Leitung
- 55: Drosselelement
- 56: Ventil
- 58: Leitung
- 59: Entleerungsleitung
- 60: Ventil
- 61: Leitung
- 62: Leitung
- 63: Rückführleitung
- 70: Auslass
- 71: Auslass

## Patentansprüche

1. Vorrichtung (1) zur Zubereitung eines Brühgetränkes, mit einer Basisstation (2), in der eine Pumpe (51), eine Heizeinrichtung (50) und eine Steuerung vorgesehen sind, und einem auf der Basisstation (2) lösbar angeordneten Tank (10) für Frischwasser, wobei eine von der Basisstation (2) nach oben hervorstehende Zuleitung (6) mit einem Auslass (7) für erhitztes Wasser vorgesehen ist, der oberhalb eines mit Extraktionsmaterial befüllbaren Filterhalters (30) angeordnet ist, **dadurch gekennzeichnet, dass** der Filterhalter (30) einen Auslass (32) aufweist, der über ein ansteuerbares Ventil (33) verschließbar ist.

2. Vorrichtung nach Anspruch 1, **dadurch gekennzeichnet, dass** ein Montagehalter (9) für den Filterhalter (30) mindestens einen Anschluss zu einer Steuerleitung aufweist, über die bei eingesetztem Filterhalter (30) das Ventil (33) ansteuerbar ist.

3. Vorrichtung nach Anspruch 1 oder 2, **dadurch gekennzeichnet, dass** das Ventil (33) einen Hebel (35) mit einem Ventilkörper (36) aufweist, der drehbar an dem Auslass (32) gelagert ist und über eine Feder (39) in eine Verschlussposition vorgespannt ist.

4. Vorrichtung nach einem der vorhergehenden Ansprüche, **dadurch gekennzeichnet, dass** das Ventil (33) über einen bestrombaren Elektromagneten (34) von der Schließposition in die Öffnungsposition bewegbar ist.

5. Vorrichtung nach einem der vorhergehenden Ansprüche, **dadurch gekennzeichnet, dass** an der Zuleitung (6) ein Montagehalter (9) für den Filterhalter (30) fixiert ist und über die Zuleitung (6) sowohl mindestens eine Leitung (61, 62) zur Zuführung von erhitztem Wasser zu dem Auslass (7) und eine elektrische Leitung zum Ansteuern des Ventils (33) vorgesehen sind.

6. Vorrichtung nach einem der vorhergehenden Ansprüche, **dadurch gekennzeichnet, dass** an der Zuleitung (6) eine erste Leitung (61) für heißes Wasser zu einem ersten Auslass (70) und eine zweite Leitung (62) für heißes Wasser zu einem zweiten Auslas (71) vorgesehen sind, die zum Brühen von Kaffee abwechselnd mit heißem Wasser durchströmbar sind.

7. Vorrichtung nach einem der vorhergehenden Ansprüche, **dadurch gekennzeichnet, dass** an einer wasserführenden Leitung (58) hinter der Heizeinrichtung (50) ein schaltbares Ventil (56) vorgesehen ist, um das erhitzte Wasser wahlweise der Zuleitung (6) mit dem Auslass (7) oder dem Tank (10) mit Frischwasser zuzuleiten.

8. Vorrichtung nach einem der vorhergehenden Ansprüche, **dadurch gekennzeichnet, dass** der Auslass (7) abnehmbar an dem Zulauf montiert ist, insbesondere über mindestens einen Magneten.

9. Vorrichtung nach einem der vorhergehenden Ansprüche, **dadurch gekennzeichnet, dass** die Vorrichtung eine auf der Basisstation (2) angeordnete Mahleinheit (20) aufweist, die über die Basisstation (2) mit Strom versorgt wird und die einen Behälter (21) für Kaffeebohnen, ein Mahlwerk und einen Auslass (23) für gemahlenes Kaffeemehl aufweist.

10. Vorrichtung nach Anspruch 9, **dadurch gekennzeichnet, dass** die Mahleinheit (20) einen Halter (24) zum Anhängen des Filterhalters (30) aufweist, um das gemahlene Kaffeemehl in dem Filterhalter (30) aufzufangen.

11. Vorrichtung nach Anspruch 10, **dadurch gekennzeichnet, dass** der Halter (24) mit einer Wägezelle verbunden ist und über eine Erfassung des Gewichts des eingefüllten Kaffeemehls in den Filterhalter (30) die Mahleinheit (20) abschaltbar ist.

12. Vorrichtung nach Anspruch 10, **dadurch gekennzeichnet, dass** über die Erfassung des Gewichts des eingefüllten gemahlenen Kaffeemehls in den Filterhalter (30) das in den Filterhalter (30) eingegebene Volumen an heißem Wasser steuerbar ist.

13. Vorrichtung nach einem der vorhergehenden Ansprüche, **dadurch gekennzeichnet, dass** der von der Basisstation (2) abnehmbare Tank (10) für Frischwasser über einen ersten Anschluss zum Ableiten von Wasser aus dem Tank (10) und einem zweiten Anschluss zum Zuführen von Wasser in den Tank (10) mit der Basisstation (2) verbunden ist.
